# EUROPÄISCHE PATENTANMELDUNG

(11) **EP 3 262 935 A1**
(43) Veröffentlichungstag der Anmeldung: **03.01.2018**
(21) Anmeldenummer: 16185502.8
(22) Anmeldetag: 24.08.2016
(51) Int. Cl.: A01M 7/00, A01N 25/00, A01B 79/00, G09B 29/00

(54) **VERFAHREN ZUR UNKRAUTBEKÄMPFUNG**

(30) Priorität: 28.06.2016 EP 16176650
(71) Anmelder: Bayer CropScience AG, 40789 Monheim am Rhein (DE)
(72) Erfinder: PETERS, Ole, 25724 Neufeld (DE); HOFFMANN, Holger, 42781 Haan (DE); GIRG, Andree-Georg, 53177 Bonn (DE); JOHNEN, Andreas, 48167 Münster (DE)
(74) Vertreter: BIP Patents

(57) **Zusammenfassung**

Die vorliegende Erfindung betrifft das technische Gebiet der Bekämpfung von Schadorganismen beim Anbau von Kulturpflanzen. Gegenstand der vorliegenden Erfindung ist ein Verfahren zur Bekämpfung von Schadorganismen, ein System zur Bekämpfung von Schadorganismen und die Verwendung von digitalen Applikationskarten zur Vermeidung von Resistenzen bei der Bekämpfung von Schadorganismen.

## Beschreibung

Die vorliegende Erfindung betrifft das technische Gebiet der Bekämpfung von Schadorganismen beim Anbau von Kulturpflanzen. Gegenstand der vorliegenden Erfindung ist ein Verfahren zur Bekämpfung von Schadorganismen, ein System zur Bekämpfung von Schadorganismen und die Verwendung von digitalen Applikationskarten zur Vermeidung von Resistenzen bei der Bekämpfung von Schadorganismen.
Beim Anbau von Kulturpflanzen gibt es viele unterschiedliche Organismen, die den Ertrag mindern, die Qualität der Ernte negativ beeinflussen oder einen sonstigen unerwünschten Einfluss auf die Kulturpflanze oder das Erntegut ausüben können.
Solche Schadorganismen sind beispielsweise Unkräuter und Ungräser, Pilze, tierische Schädlinge und Krankheitserreger.
Daneben gibt es viele unterschiedliche Maßnahmen und Mittel zur Verhinderung, Verminderung oder Bekämpfung solcher Schadorganismen.
Die nachfolgenden Ausführungen befassen sich mit dem Beispiel der Unkräuter und Ungräser, gelten analog aber auch für andere Schadorganismen.
Durch den Einsatz von Herbiziden können Unkräuter und Ungräser beim Anbau von Kulturpflanzen erfolgreich bekämpft werden. Die Unkräuter und Ungräser konkurrieren nicht mehr mit der Kulturpflanze um Wasser, Nährstoffe, Licht, Standraum und andere Ressourcen. Die Folge ist eine Ertragssteigerung. Ferner wird der Prozess des Erntens der Kulturpflanze vereinfacht und die Qualität der Ernte erhöht, da keine Unkräuter und Ungräser von der Kulturpflanze getrennt und aussortiert werden müssen.
Allerdings werden beim Einsatz von Herbiziden zunehmend Resistenzen beobachtet. Die Entstehung einer Resistenz gegen ein Herbizid ist ein natürlicher Prozess, der es Pflanzen ermöglicht, sich auf ihre Umweltbedingungen einzustellen und so ihr Überleben zu sichern.
Die Entwicklung resistenter Pflanzen beginnt mit einzelnen Individuen, die in jeder Population natürlich vorkommen und die resistent gegen die eingesetzten Mittel sind.
Durch wiederholte Anwendungen von Herbiziden mit gleichen oder ähnlichen Wirkungsmechanismen kommt es zu einem Selektionsdruck auf die Unkräuter. Dieser Selektionsdruck begünstigt das Überleben entsprechend angepasster (resistenter) Individuen. Wird keine Strategie zur Abwendung oder Unterbrechung dieses Selektionsprozesses durchgeführt, können resistente Individuen innerhalb einer Population im Lauf der Zeit vorherrschend werden. Daraus entstehen die ersten Bekämpfungsprobleme und schließlich liegt eine resistente Population vor.
Mit zunehmender Einsatzintensität von Herbiziden nimmt folglich auch der Selektionsdruck auf widerstandfähige Biotypen zu.

Es werden oft zwei Referenztypen voneinander unterschieden: die wirkortspezifische Resistenz und die metabolische Resistenz.
Bei der wirkortspezifischen Resistenz ist der Wirkort, an der der Wirkstoff im Unkraut angreift, so verändert, dass das Herbizid dort nicht mehr wirken kann. Dadurch können selbst hohe Aufwandmengen nicht mehr aktiv werden.
Bei der metabolischen Resistenz wird ein Herbizid schneller durch eine resistente Pflanze zu einem nicht phytotoxischen Metaboliten abgebaut als durch eine nicht-resistente Pflanze. Eine höhere Aufwandmenge kann zu einem gewissen Punkt die Minderwirkung des Herbizids ausgleichen.
Es gibt Faktoren, die die Entstehung resistenter Populationen begünstigen: Zum Beispiel führen einseitige Fruchtfolgen meist zu einer deutlichen Vermehrung einzelner Schadpflanzen; je früher der Saattermin ist, desto mehr Schadpflanzen treten in der Regel auf; bei einer nicht-wendenden Bodenbearbeitung ist eine stärkere Anreicherung von Ungras- und Unkrautsamen in der obersten Bodenschicht zu beobachten.
Dementsprechend gibt es Maßnahmen, die der Landwirt ergreifen kann, um eine Resistenz zu verhindern.
Eine Maßnahme besteht beispielsweise darin, den Einsatz von Pflanzenschutzmitteln auf ein Minimum zu reduzieren.
Zum gezielten Einsatz von Pflanzenschutzmitteln sind in den vergangenen Jahren verschiedene Ansätze veröffentlicht worden. Die Offenlegungsschrift WO95/01719 beschreibt ein Computersystem, mit dem ein Feld zunächst in mehrere Zonen aufgeteilt wird, die unabhängig voneinander überwacht werden. Eine Bewässerung und der Einsatz von Chemikalien erfolgt dann zonenweise in Abhängigkeit der Bedürfnisse, die durch die Überwachung ermittelt werden. Für die andauernde Beobachtung der Zonen werden entsprechende Sensoren sowie Mittel zur Datenerfassung, Datenverarbeitung und Datenanalyse benötigt.
GB2447681A offenbart ein Verfahren zur Behandlung von Pflanzen mit einem Pflanzenschutzmittel, bei dem ein Anwender mit einem tragbaren Applikator Pflanzenschutzmittel nach Bedarf appliziert, wobei der Weg, den der Anwender zurücklegt, mit einem GPS-Empfänger verfolgt und aufgezeichnet wird. Zusätzlich zur Route, die der Anwender nimmt, wird die Aufzeichnung der jeweils an einem Ort applizierten Menge an Pflanzenschutzmitteln vorgeschlagen. Auf diese Weise wird ein Datensatz generiert, der angibt, an welchen Orten welche Mengen an Pflanzenschutz appliziert worden sind.
Das Patent US 6,199,000 beschreibt ein Verfahren, bei dem während des Pflanzens von Nutzpflanzen ein RTK GPS (Real Time Kinematic Global Positioning System) Empfänger verwendet wird, um eine digitale Karte des Felds zu erzeugen. Durch die hohe Genauigkeit der Positionsbestimmung von RTK GPS sind auf der digitalen Karte die Standorte der einzelnen Nutzpflanzen bis auf wenige Zentimeter genau verzeichnet. Ein mit einem geeigneten Sensor (z.B. einem "Chlorophyll-Detektor") ausgestattetes Fahrzeug kann somit Pflanzen erkennen, die an Orten wachsen, an denen kein Saatgut in den Boden eingebracht worden ist. Werden Pflanzen an Stellen detektiert, an denen keine Aussaat erfolgt ist, handelt es sich mit hoher Wahrscheinlichkeit um ein Unkraut. Dieses kann dann vor Ort direkt bekämpft werden. Es wird auch vorgeschlagenen, ein Bild von der detektierten Pflanze aufzunehmen, und dieses Bild mit Bildern von Unkräutern in einer Datenbank zu vergleichen, um die Art des Unkrauts zu bestimmen. Ein solches Vorgehen ermöglicht eine gezieltere Bekämpfung der Schadpflanze. In US 6,199,000 wird zudem vorgeschlagen, den Ort des Unkrauts in der digitalen Karte zu speichern. Als Grund wird angeführt, dass beispielsweise die Batterie des Fahrzeugs nicht mehr ausreichen könnte, um Bekämpfungsmaßnahmen gegen ein Unkraut zu ergreifen, nachdem das Unkraut entdeckt worden ist. Die Speicherung des Unkrautorts ermöglicht eine spätere Bekämpfung, wenn die Batterie des Fahrzeugs wieder aufgeladen ist.
US 2009/0132132A1 offenbart ein weiteres Verfahren zur Applikation von Pflanzenschutzmitteln. Bei der Pflanzung von Kulturpflanzen wird eine digitale Karte erzeugt, auf der diejenigen Pflanzenhybride verzeichnet sind, die tolerant oder resistent gegenüber einem Herbizid sind, und auf der diejenigen Pflanzen verzeichnet sind, die keine solche Toleranz oder Resistenz aufweisen. Die Applikation eines Herbizids erfolgt weitestgehend automatisiert. Mit Hilfe der digitalen Karte und einer entsprechenden Software soll erreicht werden, dass unselektive Herbizide nur dort appliziert werden, wo diejenigen Pflanzenhybride angepflanzt wurden, die tolerant oder resistent gegenüber dem Herbizid sind, und kein unselektives Herbizid dort zu applizieren, wo nicht-resistente oder nicht-tolerante Kulturpflanzen angepflanzt wurden.
WO00/23937 beschreibt ein Computersystem. Teil des Computersystems ist eine digitale Karte eines Ackerfelds, die auf einer fotografischen Aufnahme beruht, und die geografische Längen- und Breitenangaben enthält, so dass eine Positionsbestimmung möglich ist. In dieser digitalen Karte kann ein Anwender Zonen definieren. Den Zonen kann der Anwender Formulierungen von Substanzen (Dünger, Pestizide, Herbizide) und zu applizierende Mengen dieser Substanzformulierungen zuordnen. Es wird vorgeschlagen, bei der Zuordnung der Formulierungen und der Substanzen die Ergebnisse chemischer Analysen des Bodens von dem entsprechenden Ackerfeld zu berücksichtigen. Digitale Bildbearbeitungsmethoden zur Analyse der fotografischen Aufnahme des Ackerfelds können ebenso angewandt werden, um adäquate Substanzformulierungen und deren Mengen auszuwählen, wie beispielsweise Ertragskarten oder andere Fernerkundungsdaten. Expertenwissen und Wetterdaten können ebenso einfließen. Das Computersystem kann einen Datensatz erzeugen. Dieser Datensatz ermöglicht es einem Landwirt mit Hilfe eines entsprechenden Fahrzeugs die verschiedenen Zonen des Ackerlands anzufahren und die entsprechenden Mengen an entsprechenden Formulierungen gemäß den vorgenommen Zuordnungen zu applizieren.
In der Dissertationsschrift von Carina Ritter (Evaluation of weed populations under the influence of site-specific weed control to derive decision rules for a sustainable weed management, Institute of Phytomedicine, Weed Science Department, University of Hohenheim, under the supervision of Prof. Dr. R. Gerhards, 2008) wird beschrieben, wie eine digitale Verteilungskarte von Unkräutern (Galium aparine L. und Alopecurus myosuriodes HUDS) erzeugt und auf Basis dieser Karte Herbizid mit Hilfe eines DGPSkontrollierten (DGPS=Differential Global Positioning System) Sprühautomaten standortspezifisch appliziert wurde. Dabei wurden teilweise Unkraut-Schwellenwerte berücksichtigt. Es wurden für mehrere Jahre jeweils zunächst die digitalen Unkraut-Verteilungskarten erzeugt und dann wurde auf Basis der Karten eine Behandlung mit Herbiziden vorgenommen, wobei in jedem Jahr nur einmal eine Herbizid-Formulierung standortspezifisch appliziert wurde (siehe insbesondere Tabelle 1 in Kapitel 2.2.2 und Tabelle 6 in Kapitel 3.2.3). Es wurde die Tendenz beobachtet, dass Flecken mit einer hohen Unkrautdichte über die Jahre erhalten blieben.
Ausgehend vom beschriebenen Stand der Technik stellt sich einem Fachmann die technische Aufgabe, Schadorganismen wirkungsvoll und effizient zu bekämpfen, wobei der Einsatz von Bekämpfungsmitteln auf ein sinnvolles und wirtschaftliches Maß zu beschränken ist, und das Risiko der Bildung von Resistenzen gegen die eingesetzten Bekämpfungsmittel zu reduzieren ist.
Gelöst wird diese Aufgabe durch die Gegenstände der unabhängigen Ansprüche 1, 8, 14 und 17. Bevorzugte Ausführungsformen finden sich in den abhängigen Ansprüchen sowie in der nachfolgenden Beschreibung.
Ein erster Gegenstand der vorliegenden Erfindung ist ein Verfahren zur Bekämpfung von Schadorganismen auf einem Feld, auf dem Kulturpflanzen angebaut werden, das durch die folgenden Schritte gekennzeichnet ist:
(A) Erzeugen einer digitalen Schadorganismen-Verteilungskarte, auf der Teilflächen auf dem Feld verzeichnet sind, an denen die Schadorganismen detektiert worden sind;
(B) Erzeugen einer digitalen Applikationskarte auf Basis der digitalen Unkraut-Verteilungskarte, wobei auf der digitalen Applikationskarte diejenigen Teilflächen des Feldes verzeichnet sind, auf denen eines oder mehrere Bekämpfungsmittel gegen die Schadorganismen appliziert werden sollen, wobei für jede dieser Teilflächen eine Zahl *N* von Behandlungen mit einem oder mehreren Bekämpfungsmitteln verzeichnet wird, wobei *N* größer als 1 ist;
(C) Applizieren eines oder mehrerer Bekämpfungsmittel gegen die Schadorganismen gemäß der digitalen Applikationskarte aus Schritt (B), wobei die Zahl *N* für die behandelten Teilflächen infolge der Behandlung um 1 vermindert wird;
(D) Wiederholen des Schrittes (C) für jede Teilfläche bis N den Wert Null erreicht hat.

Ein weiterer Gegenstand der vorliegenden Erfindung ist eine digitale Applikationskarte, auf der Teilflächen eines Feldes für Kulturpflanzen verzeichnet sind, und bei der für jede solche Teilfläche eine ganze Zahl N verzeichnet ist, die angibt, wie viele Male die Teilfläche mit einem oder mehreren Bekämpfungsmitteln für die Schadorganismen behandelt werden sollen, wobei N größer als 1 ist.

Ein weiterer Gegenstand der vorliegenden Erfindung ist ein System zur Bekämpfung von Schadorganismen umfassend:
(a) eine digitale Applikationskarte, auf der diejenigen Teilflächen eines Feldes verzeichnet sind, die mit einem oder mehreren Bekämpfungsmitteln für die Schadorganismen behandelt werden sollen;
(b) ein Positionsbestimmungssystem;
(c) eine Applikations-Vorichtung, umfassend
   - mindestens einen Behälter zur Aufnahme mindestens eines Bekämpfungsmittels gegen die Schadorganismen,
   - eine Sprühvorrichtung zum Applizieren des mindestens einen Bekämpfungsmittels, und
   - eine Steuereinheit, umfassend einen Arbeitsspeicher zum Einlesen der digitalen Applikationskarte, Mittel zur Kommunikation mit dem Positionsbestimmungssystem und Mittel zur Steuerung der Sprühvorrichtung,
dadurch gekennzeichnet, dass auf der digitalen Applikationskarte für jede Teilfläche eine Zahl N verzeichnet ist, die angibt, wie viele Male eine Behandlung der Teilfläche mit dem Bekämpfungsmittel erfolgen soll, wobei N größer als 1 ist, und wobei die Steuereinheit so ausgestattet ist, dass die Zahl N nach einer erfolgten Behandlung um eins vermindert wird.

Ein weiterer Gegenstand der vorliegenden Erfindung ist
die Verwendung einer digitalen Applikationskarte, auf der Teilflächen eines Feldes für Kulturpflanzen verzeichnet sind, bei denen eine Behandlung mit einem oder mehreren Bekämpfungsmitteln gegen Schadorganismen erfolgen soll,
zur Applikation eines oder mehrerer Bekämpfungsmittel gegen die Schadorganismen,
dadurch gekennzeichnet, dass die Teilflächen N-mal mit einem oder mehreren Bekämpfungsmitteln behandelt werden, wobei N eine ganze Zahl größer als 1 ist.

Die Erfindung wird nachstehend näher erläutert, ohne zwischen den Erfindungsgegenständen (Verfahren, Applikationskarte, System, Verwendung) zu unterscheiden. Die nachfolgenden Erläuterungen sollen vielmehr für alle Erfindungsgegenstände in analoger Weise gelten, unabhängig davon, in welchem Kontext (Verfahren, Applikationskarte, System, Verwendung) sie erfolgen.

Unter einem "Schadorganismus" wird nachfolgend ein Organismus verstanden, der beim Anbau von Kulturpflanzen in Erscheinung treten und die Kulturpflanze schädigen, die Ernte der Kulturpflanze negativ beeinflussen oder mit der Kulturpflanze um natürliche Ressourcen konkurrieren kann. Beispiele für derartige Schadorganismen sind Unkräuter, Ungräser, tierische Schädlinge wie beispielsweise Käfer, Raupen und Würmer, Pilze und Krankheitserreger (z.B. Bakterien und Viren). Auch wenn Viren aus biologischer Sicht nicht zu den Organismen zählen, sollen sie dennoch vorliegend unter den Begriff Schadorganismus fallen.
Zwischen den genannten Schadorganismen gibt es in der Literatur manchmal Überlagerungen. Insbesondere bei Pilzbefall wird oftmals synonym von Pilz und Krankheit gesprochen. Eine weitere Überlagerung ergibt sich beispielsweise, wenn ein tierischer Schädling einen Virus überträgt. In einem solchen Fall können sowohl der Schädling als auch der Virus als Schadorganismen betrachtet und mit geeigneten Bekämpfungsmitteln bekämpft werden. Für die vorliegende Erfindung sind solche Überlagerungen jedoch unerheblich. Aus Sicht der vorliegenden Erfindung wird ein negativer Effekt beim Anbau einer Kulturpflanze im Feld beobachtet, der in Form von Nestern auftritt. Es gilt, diesen Effekt mit geeigneten Bekämpfungsmitteln zu beseitigen, wobei die Menge an eingesetztem Bekämpfungsmittel auf ein sinnvolles und wirtschaftliches Maß zu beschränken ist.
Unter dem Begriff "Bekämpfung" wird eine Verhinderung der Ausbreitung oder Reduzierung der Menge an vorhandenen Schadorganismen bezeichnet. Im Fall der Unkräuter/Ungräser bezieht sich der Begriff "Menge" beispielsweise auf die Biomasse, die in Form von Unkräutern/Ungräsern vorliegt. Unter dem Begriff "Menge" kann aber insbesondere bei einer Krankheit auch die Menge an Kulturpflanzen verstanden werden, die bereits Krankheitssymptome aufweist.
Die Applikation eines Bekämpfungsmittels auf einer Teilfläche wird vorliegend auch als "Behandlung" bezeichnet; eine "behandelte Teilfläche" ist eine Teilfläche, auf der ein oder mehrere Bekämpfungsmittel appliziert worden sind.
Die Bekämpfung eines Schadorganismus erfolgt durch Applikation eines oder mehrerer Bekämpfungsmittel. Für die einzelnen Schadorganismen existiert eine Vielzahl an Bekämpfungsmitteln, wie beispielsweise Herbizide (gegen Unkräuter und/oder Ungräser), Pestizide (gegen tierische Schädlinge) und Fungizide (gegen Pilze).
Beispielsweise erfolgt die Bekämpfung eines Unkrauts oder Ungrases durch die Applikation mit einem oder mehreren Herbiziden.
Erfindungsgemäß erfolgt eine Bekämpfung von Schadorganismen auf einem Feld durch mehrfache Applikation eines Bekämpfungsmittels an den Orten, an denen die Schadorganismen zumindest einmal detektiert worden sind und an denen mit der Ausbildung stabiler Nester zu rechnen ist.
Unter dem Begriff "Kulturpflanze," wird eine Pflanze verstanden, die durch das Eingreifen der Menschen zielgerichtet als Nutz- oder Zierpflanze angebaut wird.

Unter dem Begriff "Feld" wird ein räumlich abgrenzbarer Bereich der Erdoberfläche verstanden, der landwirtschaftlich genutzt wird, indem auf einem solchen Feld Kulturpflanzen angepflanzt, mit Nährstoffen versorgt und geerntet werden.
Unter dem Begriff "Nest" wird eine Teilfläche eines Feldes verstanden, auf dem ein bestimmter Schadorganismus wiederholt beobachtet wird.

Die nachfolgenden Ausführungen befassen sich vornehmlich mit Unkräutern und Ungräsern als Schadorganismen; sie sollen aber in analoger Weise für alle möglichen Schadorganismen gelten. Die Erfindung ist demnach nicht auf Unkräuter und Ungräser als Schadorganismen beschränkt, auch wenn sie vorzugsweise zur Bekämpfung von Unkräutern und/oder Ungräsern mittels Herbiziden eingesetzt wird.
Unter dem Begriff "Unkraut" (Mehrzahl: Unkräuter) werden Pflanzen der spontanen Begleitvegetation (Segetalflora) in Kultmpflanzenbeständen, Grünland oder Gartenanlagen verstanden, die dort nicht gezielt angebaut werden und z.B. aus dem Samenpotential des Bodens oder über Zuflug zur Entwicklung kommen. Der Begriff ist nicht auf Kräuter im eigentlichen Sinne beschränkt, sondern umfasst auch Gräser, Farne, Moose oder holzige Pflanzen.
Im Bereich des Pflanzenschutzes wird häufig auch der Begriff "Ungras" (Mehrzahl: Ungräser) benutzt, um eine Abgrenzung zu den krautigen Pflanzen zu verdeutlichen. Im vorliegenden Text wird der Begriff Unkraut als Oberbegriff verwendet, der den Begriff Ungras mit erfassen soll, es sei denn, es wird auf spezifische Unkräuter oder Ungräser Bezug genommen.
Ungräser und Unkräuter im Sinne der vorliegenden Erfindung sind demnach Pflanzen, die beim Anbau einer gewünschten Kulturpflanze als Begleitung auftreten. Da sie mit der Kulturpflanze um Ressourcen konkurrieren, sind sie unerwünscht und sollen daher bekämpft werden.
Die Erfindung wird vorzugsweise für solche Schadorganismen eingesetzt, die für konstant stabile oder wiederkehrende Nester auf denselben Teilflächen eines Feldes bekannt sind. Die Nester werden in der Regel über eine Vegetationsperiode der Kulturpflanze hinaus beobachtet. Ein Beispiel für einen besonders bevorzugten Anwendungsfall stellt das Acker-Fuchsschwanzgras (Alopecurus myosuroides Huds) dar, welches eine Samenverbreitung nahe der Mutterpflanze aufweist (Wilson & Brain, 1991). Hierbei sind die Unkrautnester stabil bzw. wiederkehrend; es können allerdings auch neue hinzukommen. Weitere bevorzugte Beispiele sind Orobranche crenata Forsk in Ackerbohne (Oveisi et al. 2010), Galium aparine, V. arvensis Murr., C. album L., Polygonum aviculare L. (s. Übersicht Gerhards R (2010)).
Ferner ist die Erfindung anzuwenden auf alle Krankheiten und Schädlinge, die räumlich stabile Muster aufweisen. Ein Beispiel ist der Befall durch Nematoden (Campos-Herrera et al. 2011, Godefroid et al. 2013, Ortiz et al. 2010).

Ein "räumlich stabiles Muster" bezeichnet eine wiederholt beobachtbare bzw. messbare räumliche Verteilung bzw. Anordnung von Nestern in einem Feld. Ferner kann sich ein räumlich stabiles Muster von Krankheiten und Schädlingen auf i) die Ursache einer Krankheit oder Schädlingsbefalles, ii) auf die Krankheit oder den Schädlingsbefall selbst als auch iii) auf ein Ausprägungsmerkmal einer Krankheit bzw. eines Schädlingsbefalls beziehen. Beispielsweise kann ein Schädling W einen Virus X übertragen, der zu einer Krankheit Y mit dem Symptom Z führt. Es ist denkbar, dass W, X, Y und Z messbar sind und jeweils ein stabiles Muster ergeben.
Insbesondere können diese Muster durch eine Wechselwirkung von Entwicklungszyklus des Krankheitserregers bzw. Schädlings mit weiteren abiotischen Faktoren hervorgerufen werden. Die Erfindung ist daher auch auf Regionen im Feld anzuwenden, die aufgrund ihrer Beschaffenheit einen generell höheren Krankheits- oder Schädlingsdruck aufweisen. Beispiele solcher Beschaffenheitsfaktoren sind Lage bzw. Exposition, Mulden, Boden oder Feldrandbeschaffenheit (z.B. Hecken).
Als Beispiel sei die Septoria-Blattdürre angeführt, die bei günstigen Bedingungen für die Infektion durch Pilzsporen von Septoria Tritici entsteht. Diese günstigen Bedingungen können nun durch eine höhere Feuchte bzw. durch einen geringeren Luftaustausch gegeben sein, bedingt durch Exposition, lokale Mulden und/oder Bodenart.
Ein Beispiel für einen Schädling, bei dem wiederkehrende Muster auftreten, ist die Kohlschotenmücke (*Dasineura brassicae)* bei Raps. Durch die geringe Flugbereitschaft ist für einen Befall die Distanz zum Winterwirt maßgeblich. Ein wiederkehrendes Muster ergibt sich hier durch die Lage des Feldes relativ zu der des Winterwirtes als auch zu der des Feldes mit Rapsanbau im Vorjahr.
Ein weiteres Beispiel sind Erreger, deren Befallsdruck durch die Abbaurate von Pflanzenresten im Boden bestimmt wird. Stabile Nester können hier durch lokale Unterschiede im Boden hervorgerufen werden.

In einem ersten Schritt des erfindungsgemäßen Verfahrens wird eine digitale Schadorganismen-Verteilungskarte erstellt. Auf dieser Karte sind Teilflächen des Feldes verzeichnet, bei denen die Schadorganismen detektiert worden sind.
Der Begriff "digital" bedeutet, dass die Karte von einer Maschine, in der Regel einem Computersystem, verarbeitet werden kann. Unter "Verarbeitung" werden die bekannten Verfahren zur elektronischen Datenverarbeitung (EDV) verstanden.
Methoden zur Erzeugung von digitalen Karten, auf denen Orte verzeichnet sind, an denen Unkräuter und/oder Ungräser aufgetreten sind, sind beispielsweise in der Dissertation von Carina Ritter beschrieben: Evaluation of weed populations under the influence of site-specific weed control to derive decision rules for a sustainable weed management, Institute of Phytomedicine, Weed Science Department, University of Hohenheim, under the supervision of Prof. Dr. R. Gerhards, 2008 (siehe insbesondere Kapitel 1.1.5).

Auch die in GB2447681A, US 6,199,000, US 2009/0132132A1 und WO00/23937 beschriebenen Verfahren zur Erzeugung von digitalen Unkraut-Verteilungskarten lassen sich hier anwenden.
Bei der Erzeugung der digitalen Schadorganismen-Verteilungskarte wird das Feld nach Schadoragnismen abgesucht. Dieses Absuchen kann durch einen (oder mehrere) Menschen oder rein maschinell erfolgen. Denkbar ist auch ein maschinengestütztes Absuchen durch einen (oder mehrere) Menschen. Bevorzugt wird die Suche nach Schadoragnismen durch ein Positionsbestimmungssystem unterstützt. Das bedeutet, dass sich ein Mensch oder eine Maschine auf oder über dem Feld bewegt und die jeweilige Position des Menschen oder der Maschine mit Hilfe des Positionsbestimmungssystems automatisch erfasst und gespeichert wird. Geeignete Positionsbestimmungssysteme werden oft unter dem Begriff GPS (Global Positioning System) zusammengefasst.
Entdeckt der Mensch oder die Maschine einen Schadorganismus an einem Ort, so wird auf der digitalen Karte abgespeichert, dass an dem Ort ein Schadorganismus worden ist.
Neben der Tatsache, dass ein Schadorganismus an einem bestimmten Ort gefunden worden ist, können weitere Informationen auf der digitalen Karte abgespeichert werden, wie z.B. die Art des gefundenen Schadorganismus, die Menge, das Entwicklungsstadium und weitere Informationen.
Zur maschinellen Erkennung von Schadorganismen kann der Schadorganismus mittels einer fotografischen Einrichtung als digitales Bild aufgenommen und dann Methoden der Bilderkennung zugeführt werden.
Das maschinelle Absuchen des Feldes nach Schadorganismen kann beispielsweise mit einem Fahrzeug oder einem unbemannten Flugobjekt (Drohne) erfolgen. Auch der Einsatz von Satellitenaufnahmen des Feldes zur Erkennung von Schadorganismen ist denkbar.
Um den flächenspezifischen Einsatz verschiedener Formulierungen zu ermöglichen, werden Unkräuter/Ungräser in der Unkraut-Verteilungskarte vorzugsweise als Mono- und Dikotyledone identifiziert bzw. in Gruppen von Unkräutern und/oder Ungräsern hinsichtlich geeigneter bzw. wirksamer Formulierungen erfasst.
Bei der Generierung der Schadorganismen-Verteilungskarte ist zu beachten, dass nicht immer unbedingt die Schadorganismen selbst beobachtet werden, sondern deren Auswirkungen z.B. auf die Kulturpflanze. Dies ist jedoch für die vorliegende Erfindung unerheblich. Der Schritt (A) des erfindungsgemäßen Verfahrens ist also so zu verstehen, dass Positionen auf dem Feld detektiert und auf der digitalen Verteilungskarte verzeichnet werden, die auf das Vorhandensein eines Schadorganismus hindeuten. Der Schadorganismus wird also direkt oder indirekt (infolge seiner Auswirkungen auf die Umwelt) detektiert.
Das Ergebnis des Schritts (A) ist eine maschinenlesbare Karte, auf der Positionen verzeichnet sind, an denen Schadorganismen oder deren Wirkungen aufgefunden worden sind.

In einem nachfolgenden Schritt wird auf Basis der digitalen Schadorganismen-Verteilungskarte eine digitale Applikationskarte erzeugt.
Die digitale Applikationskarte ist maschinenlesbar und gibt an, bei welchen Teilflächen des Feldes eine Applikation eines oder mehrerer Bekämpfungsmittel erfolgen soll.
Bei der digitalen Applikationskarte kann es sich um eine so genannte AN/AUS-Karte handeln. Es ist zum Beispiel denkbar, dass überall dort, wo auf der digitalen Schadorganismen-Verteilungskarte ein Schadorganismus verzeichnet ist, auf der entsprechenden Applikationskarte verzeichnet ist, dass dort ein oder mehrere Bekämpfungsmittel appliziert werden sollen, während überall dort, wo auf der Schadorganismen-Verteilungskarte kein Schadorganismus verzeichnet ist, auf der digitalen Applikationskarte verzeichnet ist, dass dort kein Bekämpfungsmittel appliziert werden soll.
Eine solche AN/AUS-Karte ist zum Beispiel dann sinnvoll, wenn die Detektionsmethode zum Auffinden von Schadorganismen in Schritt (A) des erfindungsgemäßen Verfahrens nicht sonderlich empfindlich ist, sondern Schadorganismen nur dann entdeckt, wenn sie bereits in einer Menge vorliegen, bei der eine Schadschwelle bereits erreicht oder sogar überschritten ist.
Ist die Detektionsmethode hingegen sehr sensitiv, wird in der digitalen Applikationskarte vorzugsweise erst dann die Applikation eines Bekämpfungsmittels eingetragen, wenn an dem entsprechenden Ort ein vorher definierter Schwellenwert erreicht oder überschritten worden ist. Dazu ist es erforderlich, dass auf der digitalen Schadorganismen-Verteilungskarte die (ungefähre) Menge des jeweils vorhandenen Schadorganismus (oder die Menge an befallener Kulturpflanze) erfasst ist. Auf der digitalen Applikationskarte ist dann nur an denjenigen Orten eine geplante Bekämpfungsmittel-Applikation verzeichnet, an denen der Schwellenwert an vorhandenem Schadorganismus erreicht oder überschritten worden ist. An allen übrigen Orten ist der Schwellenwert unterschritten; dementsprechend ist keine Bekämpfungsmittel-Applikation vorgesehen und auf der Applikationskarte ist keine geplante Applikation verzeichnet.
"Schadschwelle" ist ein Begriff aus der Landwirtschaft, der Forstwirtschaft und dem Gartenbau. Er gibt die Befallsdichte mit Schaderregern, Krankheiten oder den Besatz mit Unkräutern an, ab denen eine Bekämpfung wirtschaftlich sinnvoll wird. Bis zu diesem Wert ist der wirtschaftliche Mehraufwand durch eine Bekämpfung größer als der zu befürchtende Ernteausfall. Übersteigt der Befall oder die Verunkrautung diesen Wert, werden die Bekämpfungskosten durch den zu erwartenden Mehrertrag zumindest ausgeglichen.
Je nach dem Wesen eines Schädlings oder einer Krankheit kann die Schadschwelle sehr unterschiedlich sein. Bei Schädlingen oder Krankheiten, die nur mit großem Aufwand und mit negativen Begleiterscheinungen für die weitere Produktion zu bekämpfen sind, kann die Schadschwelle sehr hoch sein. Kann jedoch schon ein geringer Befall zu einem Ausbreitungsherd werden, der die gesamte Produktion zu vernichten droht, kann die Schadschwelle sehr niedrig sein.
Im Stand der Technik finden sich viele Beispiele zur Ermittlung von Schadschwellen (siehe z.B. Claus M. Brodersen: Informationen in Schadschwellenmodellen, Berichte der GIL, Band 7, Seiten 26 bis 36, http://www.gil-net.de/Publikationen/7_26.pdf).
In einer bevorzugten Ausführungsform fließen zur Erstellung der digitalen Applikationskarte Informationen über Faktoren ein, die das Auftreten des Schadorganismus hervorrufen oder dessen Ausbreitung begünstigen.
Es ist denkbar, dass die Applikationskarte Mengenangaben über die zu applizierende Bekämpfungsmittel-Formulierung enthält. Auch die Art des Bekämpfungsmittels oder die Art der Formulierung kann auf der digitalen Applikationskarte gespeichert sein.
Die digitale Applikationskarte wird bei der ersten Erfassung eines Schadorganismus an einer bestimmten Position erstellt und die Anzahl N an Applikationen für diesen Schadorganismus an dieser Position festgelegt. Die Zahl *N* der Applikationen ist von der Art des detektierten Schadorganismus abhängig. Die Zahl der Applikationen beträgt mindestens zwei; vorzugsweise beträgt sie zwei, drei, vier oder fünf, und sie ist ebenfalls auf der Applikationskarte für jede betroffene Teilfläche hinterlegt.
In einer bevorzugten Ausführungsform wird die digitale Schadorganismen-Verteilungskarte für ein Feld innerhalb der Zeitspanne, in der die mehrfache Applikation eines Bekämpfungsmittels gemäß digitaler Applikationskarte erfolgen soll, erneut erstellt und die digitale Applikationskarte um neu gefundene Nester erweitert. Teilflächen, bei denen in der digitalen Applikationskarte eine noch zu tätigende Applikation eines Bekämpfungsmittels verzeichnet ist (*N*>0), bleiben bestehen, auch wenn aktuell kein Schadorganismus mehr detektiert wird. Wenn also für eine Teilfläche auf der digitalen Applikationskarte festgelegt worden ist, dass dort mehrfach (*N*-fach) ein Bekämpfungsmittel appliziert werden soll, die Anzahl an vorzunehmenden Applikationen in der Realität aber noch nicht erreicht ist, bleibt die Information, dass (weiterhin) auf dieser Teilflächen appliziert werden soll, bestehen, auch an dem entsprechenden Ort kein Schadorganismus mehr detektiert worden ist.
Eine mehrfache Applikation bedeutet nicht zwingend, dass die gleiche Formulierung mehrfach verwendet werden muss. Es ist denkbar, Spritzmittel unterschiedlicher Formulierung ("*Mode of Action")* zu verwenden und die Formulierung/Kombination von Spritzmitteln von Applikation zu Applikation zu variieren.
Die Formulierung kann ferner in Folgejahren bei Detektion eines weiteren Schadorganismus auf derselben Teilfläche eines Feldes entsprechend verändert werden. Insbesondere kann dies dazu führen, dass Teilflächen eines Feldes mit einem Schadorganismus jeweils mit einer Formulierung, gemeinsame Teilflächen mit mehreren Schadorganismen mit einer weiteren Formulierung behandelt werden.
Dies sei anhand der folgenden Beispiele erläutert, bei dem zwei Unkräuter (Unkraut 1 und Unkraut 2) auf derselben Teilfläche eines Feldes auftreten.
Beispiel 1: Unkraut 1 und Unkraut 2 sind empfindlich gegenüber Herbizid 1 → Herbizid 1 wird appliziert.
Beispiel 2: Unkraut 1 ist empfindlich gegenüber Herbizid 1 und Unkraut 2 ist empfindlich gegenüber Herbizid 2 und es ist kein einsetzbares Herbizid bekannt, das sowohl gegen Unkraut 1 als auch gegen Unkraut 2 wirkt → Herbizid 1 und Herbizid 2 werden appliziert.
Beispiel 3: Unkraut 1 ist empfindlich gegenüber Herbizid 1 und Unkraut 2 ist empfindlich gegenüber Herbizid 2 und es ist ein einsetzbares Herbizid 3 bekannt, das gegen Unkraut 1 als auch Unkraut 2 wirkt → Es kann entweder Herbizid 3 allein oder Herbizid 1 in Kombination mit Herbizid 2 appliziert werden.

Beispielsweise werden bei der Bekämpfung des Ungrases Ackerfuchsschwanz folgende Bekämpfungsmittel verwendet: Bei der Herbstanwendung ab BBCH Stadium 11 wird eine Sulfonylmischung bestehend aus den Wirkstoffen Mesosulfuron und Iodusulforon (vorzugsweise plus Safener) eingesetzt. Bei Wirkstoffwechsel werden dann Propoxycarbazone oder Pyroxsulam und Florasulam verwendet. Wenn im Frühjahr das Ungras wiederholt die Schadschwelle überschreitet, dann wird auch im Frühjahr eine Behandlung mit beispielsweise den Wirkstoffen Mesosulfuron und Iodusulforon (plus Safener) durchgeführt. Neben der Gruppe der ALS-Hemmer gibt es auch eine andere Wirkstoffgruppe, die der ACCase-Hemmer mit den sogenannten FOPS. Die Art des Wirkstoffes und die Ausbringungsmenge hängen von Art des Unkrautes oder Ungrases ab, der Anzahl der Pflanzen pro m² oder Biomasse des Unkrautes oder Ungrases und dem Grad der Resistenz ab.

Ferner ist denkbar, dass die digitale Applikationskarte Befehle für eine Applikationsvorrichtung für eine Bekämpfungsmittel-Formulierungen enthält. Das bedeutet, dass die digitale Applikationskarte oder Teile davon in einen Arbeitsspeicher einer Applikationsvorrichtung geladen werden können, von wo die Befehle an eine Sprühvorrichtung übermittelt werden.
Unter einer Applikationsvorrichtung wird eine maschinelle Vorrichtung zum Applizieren einer Bekämpfungsmittel-Formulierung auf einem Feld verstanden. Eine solche Applikationsvorrichtung umfasst in der Regel mindestens einen Behälter zur Aufnahme mindestens einer Bekämpfungsmittel-Formulierung, eine Sprühvorrichtung, mit der die Bekämpfungsmittel-Formulierung auf dem Feld abgegeben wird und eine Steuereinrichtung, mit der die Förderung der mindestens einen Bekämpfungsmittel-Formulierung aus ihrem Behälter in Richtung Sprühvorrichtung gesteuert wird. Die digitale Applikationskarte wird dementsprechend vorzugsweise in dem Arbeitsspeicher der Steuereinheit gespeichert. Die Steuereinheit steht darüber hinaus vorzugsweise mit einem Positionsbestimmungssystem in Verbindung, das die Lage der Applikationsvorrichtung auf dem Feld ermittelt. Vorzugsweise setzt die Steuereinrichtung den Applikationsprozess dann in Gang, wenn auf der digitalen Applikationskarte verzeichnet ist, dass an einem Ort eine Applikation erfolgen soll und wenn das Positionsbestimmungssystem meldet, dass sich die Applikationsvorrichtung gerade an diesem Ort befindet.

In einem nächsten Schritt des erfindungsgemäßen Verfahrens erfolgt die Applikation eines oder mehrerer Bekämpfungsmittel gegen die in Schritt (A) identifizierten Schadorganismen unter Verwendung der digitalen Applikationskarte.
In einer Ausführungsform lädt sich ein Mensch (Nutzer) die digitale Applikationskarte in ein mobiles Computersystem, z.B. ein Mobiltelefon (Smartphone), das über einen GPS-Empfänger verfügt. Während der Nutzer über das Feld geht, zeigt ihm das mobile Computersystem anhand einer grafischen Abbildung des Feldes an, wo er sich jeweils befindet und an welchen Stellen er manuell ein oder mehrere Bekämpfungsmittel sprühen (applizieren) soll. Er sprüht dann manuell an den Stellen, an denen die Applikationskarte einen entsprechenden Hinweis enthält. Falls der Nutzer ein Bekämpfungsmittel an einer Stelle appliziert, ist es denkbar, dass über eine entsprechende Sensorik dem mobilen Computersystem eine Rückmeldung über den erfolgten Applikationsprozess übermittelt und der erfolgte Applikationsprozess gespeichert wird. Es ist auch denkbar, dass der erfolgte Applikationsprozess auf dem mobilen Computersystem angezeigt wird, damit der Nutzer erkennen kann, an welchen Stellen er bereits appliziert hat. Ferner ist denkbar, dass die auf dem mobilen Computersystem erfassten Daten sofort oder zu einem späteren Zeitpunkt an ein stationäres Computersystem (z.B. einem Server) übermittelt und dort gespeichert werden. In jedem Fall wird die erfolgte Applikation für jede Teilfläche in der Weise in der digitalen Applikationskarte erfasst, dass die Zahl *N* der (noch) zu tätigenden Applikationen (Behandlungen) um eins vermindert wird.
Denkbar ist auch, dass ein Mensch mit einem Fahrzeug über das Feld fährt, die jeweilige Position des Fahrzeugs mittels GPS-Empfänger erfasst wird, und auf Basis der digitalen Applikationskarte Befehle an eine Sprühvorrichtung am Fahrzeug übermittelt werden, wenn sich das Fahrzeug an einem Ort auf dem Feld befindet, an dem gemäß Applikationskarte eine Applikation eines oder mehrerer Bekämpfungsmittel erfolgen soll, woraufhin die entsprechende Applikation automatisch erfolgt.
Denkbar ist auch, dass die Applikation eines oder mehrerer Bekämpfungsmittel vollautomatisch erfolgt: eine unbemannte Maschine bewegt sich GPS-gestützt über das Feld und appliziert an den Stellen auf dem Feld, an denen in der digitalen Applikationskarte eine entsprechende Applikation vorgesehen ist. Wieder wird die erfolgte Applikation in der digitalen Applikationskarte verzeichnet: für die behandelten Teilflächen wird die Zahl N um eins vermindert.
Die Bekämpfung von Schadorganismen mit entsprechenden Pflanzenschutzmitteln auf chemischer und/oder biologischer Basis kann durch physikalische/mechanische Bekämpfungsmethoden ergänzt werden.

Unter physikalischer Entfernung (oder auch mechanischer Entfernung) wird verstanden, dass beispielsweise das Unkraut/Ungras als Schadorganismus entweder vollständig entfernt wird, oder Teile davon entfernt werden, so dass das Unkraut/Ungras nicht mehr lebensfähig ist und abstirbt. Im Gegensatz zur Bekämpfung des Unkrauts/Ungrases mit einem Herbizid, was als chemische Bekämpfung bezeichnet werden kann, wird bei der physikalischen/mechanischen Bekämpfung kein chemisches oder biologisches Mittel appliziert. Die physikalische/mechanische Bekämpfung übt daher auch keinen Selektionsdruck auf die Unkräuter/Ungräser aus, ist jedoch oftmals aufwändiger und teurer als die Applikation von Herbiziden.

Unter einer physikalischen/mechanisch Bekämpfung soll auch beispielsweise eine Bewässerung verstanden werden, mit der beispielsweise Unkräuter gewünscht zum Auflaufen gebracht werden, um sie dann gezielt zu eliminieren. Unter einer physikalischen/mechanisch Bekämpfung soll zudem auch ein Abflammen der Schadorganismen verstanden werden.
Es ist beispielsweise denkbar, chemische und physikalische Verfahren abwechselnd anzuwenden.
Es ist auch denkbar, dass ein Teil einer Fläche chemisch, ein anderer Teil physikalisch behandelt wird.
Denkbar ist aber auch eine kombinierte Variante in einem Arbeitsgang, z.B. wenn der Einsatz von Chemikalien aufgrund gesetzlicher Reglungen begrenzt ist oder eine Kombination von Schadorganismen vorliegt, bei der eine kombinierte Bekämpfung mit mechanischen und chemischen Mitteln die besten Erfolgsaussichten hat. Die kombinierte Anwendung physikalischer und chemischer Verfahren kann auch sinnvoll sein, wenn die Kombination einen synergistischen Effekt ausübt.
In einer bevorzugten Ausführungsform erfolgt an den Stellen des Feldes, an denen zwar kein Schwellenwert eines Schadorganismus überschritten worden ist, an denen aber ein Schadorganismus detektiert worden ist, eine physikalische Entfernung des Schadorganismus.

Die Applikation eines oder mehrerer Bekämpfungsmittels auf Basis der digitalen Applikationskarte wird eine gewisse Zeit in Anspruch nehmen. Diese Zeit richtet sich z.B. nach der Größe des Feldes, der Anzahl der Stellen im Feld, an denen eine Applikation erfolgen soll, der Größe dieser Stellen und der Menge an Bekämpfungsmittel, die eine Applikationsvorrichtung mit sich führen kann (unter Umständen reicht die Menge an Bekämpfungsmittel, die eine Applikationsvorrichtung mit sich führen kann, nicht aus, um alle Stellen, die auf der Applikationskarte verzeichnet sind, mit Bekämpfungsmittel zu versorgen, so dass die Applikationsvorrichtung einmal oder mehrfach aufgefüllt werden muss, was Zeit in Anspruch nimmt).

Unter "Abarbeiten der Applikationskarte" wird der Prozess verstanden, bei dem alle Stellen im Feld, für die auf der digitalen Applikationskarte verzeichnet ist, dass ein oder mehrere Bekämpfungsmittel appliziert werden sollen, von einer Applikationsvorrichtung aufgesucht worden sind und die entsprechende Applikation vorgenommen worden ist.
Wird die Applikationskarte das erste Mal, nachdem sie erstellt worden ist, abgearbeitet, so wird dieser Prozess hier als "erstes Applizieren" bezeichnet.
In der Regel wird das Abarbeiten der digitalen Applikationskarte je nach Größe des Feldes weniger als einen Tag bis 2 Wochen in Anspruch nehmen.
Die Zeitdauer des ersten Abarbeitens erfolgt somit innerhalb einer ersten Zeitspanne.
Erfindungswesentlich ist, dass die digitale Applikationskarte mindestens ein zweites Mal abgearbeitet wird. Die auf der Applikationskarte verzeichneten Nester werden damit mehrfach (z.B. 2-fach, 3-fach, 4-fach oder 5-fach) mit einem Bekämpfungsmittel besprüht.
Es erfolgt somit nach Schritt (C) des erfindungsgemäßen Verfahrens ein Schritt (D), bei dem dieselben Orte auf der Applikationskarte innerhalb einer zweiten Zeitspanne noch einmal besprüht werden (zweites Abarbeiten der Applikationskarte).
Denkbar ist, dass dieselbe Applikationskarte innerhalb eine dritten Zeitspanne ein drittes Mal abgearbeitet wird.
Denkbar ist, dass dieselbe Applikationskarte innerhalb einer vierten Zeitspanne ein viertes Mal abgearbeitet wird.
Ein weiteres wiederholtes Abarbeiten ist denkbar, aber jedes auf das dritte Abarbeiten erfolgende weitere Abarbeiten ist weniger wahrscheinlich.
Die Schritte (C) und (D) können daher auch unter dem Punkt zusammengefasst werden: Mehrfaches Anwenden der in Schritt (B) erzeugten digitalen Applikationskarte in der Weise, dass bei den Teilflächen des Feldes, bei denen eine Schadschwelle eines oder mehrerer Schadorganismen überschritten sind, mehrfach (*N*-fach) ein oder mehrere Bekämpfungsmittel appliziert werden (auch, wenn zum Zeitpunkt der Applikation kein Schadorganismus mehr detektiert wird).
Wie oben beschrieben, kann die Applikationskarte zu jeder Zeit erweitert werden, indem neu detektierte Nester aufgenommen werden.
Zwischen dem ersten Abarbeiten der Applikationskarte innerhalb der ersten Zeitspanne (Schritt (C)) und dem zweiten Abarbeiten der Applikationskarte innerhalb der zweiten Zeitspanne (Schritt (D)) liegt eine Zeitspanne, in der keine Applikation eines Bekämpfungsmittels erfolgt. Diese Zeitspanne beträgt mindestens einen Tag, vorzugsweise mindestens eine Woche, noch mehr bevorzugt mindestens einen Monat. Wird die Applikationskarte in einer dritten Zeitspanne ein drittes Mal abgearbeitet, so liegt zwischen der zweiten Zeitspanne und der dritten Zeitspanne wiederum eine Zeitspanne von mindestens einem Tag, vorzugsweise mindestens einer Woche, noch mehr bevorzugt mindestens einem Monat, in der keine Applikation erfolgt.
Analoges gilt für jedes weitere Abarbeiten der Applikationskarte.
Der Zeitabstand zwischen zwei Behandlungen einer Teilfläche wird maßgeblich dadurch bestimmt, wann mit einem erneuten Auftreten von Schadorganismen zu rechnen ist. Eine Teilfläche wird also vorzugsweise erst dann ein weiteres Mal behandelt, wenn mit einem erneuten Auftreten von Schadorganismen zu rechnen ist, besonders bevorzugt, bevor sich ein erneuter Befall der Teilfläche mit den Schadorganismen weiter auf andere Teilflächen ausbreitet.
Das mehrfache (mindestens zweifache) Abarbeiten der Applikationsklarte erfolgt vorzusgweise über das laufende Vegetationsjahr und/oder folgende Vegetationsjahre, jeweils innerhalb des Zeitraumes der Vorauflaufphase bis Ende der Vegetationsperiode der Kulturpflanze, die auf dem Feld angebaut wird.
Unter "Vorauflaufphase" wird hier der Zeitraum vom ersten Tag nach Ernte der Vorfrucht bis zum letzten Tag vor dem Aufgang der Kultur betrachtet.
In einer Ausführungsform der vorliegenden Erfindung entspricht die Zeitspanne zwischen zwei Applikationen der Dauer einer Vegetationsperiode der angebauten Kulturpflanze (plus/minus 1 Tag bis 8 Wochen).
Vorzugsweise wird jedes Jahr auf dem landwirtschaftlich genutzten Feld eine erweiterte digitale Schadorganismen-Verteilungskarte erstellt, zum einen, um den Bestand an Schadorganismen zu prüfen, und zum anderen, um die digitale Applikationskarte zu adaptieren, indem gegebenenfalls neu dazugekommene Orte, an denen eine Schadschwelle überschritten worden ist, aufgenommen werden.
Die Erfindung führt bei der effektiven Bekämpfung von z.B. Unkräutern/Ungräsern zu geringerer Entwicklung von Resistenzen:
- Der Resistenzdruck eines Feldes mit teilflächenspezifischer Applikation ist insgesamt niedriger als auf einer Fläche ohne teilflächenspezifische Applikation, da eben nur ein Teil der Fläche des Ackers dem Selektionsdruck ausgesetzt wird.
- Durch das Ausbringen der gleichen Menge bzw. Konzentration eines Herbizides auf einer Teilfläche wie auch bei nicht-teilflächenspezifischer Applikation werden sogenannte multigene Resistenzen, die sich sonst quantitativ bei wiederholtem Spritzen mit niedrigen Dosen aufbauen, vermieden. Dies entspricht der ,guten landwirtschaftlichen Praxis'.
- Durch wiederholte Anwendung der Applikationskarte wird das Überleben einzelner Individuen von Unkräutern/Ungräsern unwahrscheinlicher auf den identifizierten Patches der Unkrauterkennungskarte. Eine jährliche Erstellung der Karte überprüft diesen Sachverhalt und wirkt somit einer Resistenz auf nicht behandelten Teilflächen entgegen.
- Die Verwendung verschiedener Herbizide steigert den Behandlungserfolg und verringert damit die Entwicklung von Resistenzen gegen ein bestimmtes Spritzmittel.

Bevorzugte Ausführungsformen der vorliegenden Erfindung sind daher:
1. Ein Verfahren zur Bekämpfung von Unkräutern und/oder Ungräsern auf einem Feld, auf dem Kulturpflanzen angebaut werden, umfassend die folgenden Schritte:
   (A) Erzeugen einer digitalen Unkraut-Verteilungskarte, auf der Orte auf dem Feld verzeichnet sind, an denen die Unkräuter und/oder die Ungräser detektiert worden sind;
   (B) Erzeugen einer digitalen Applikationskarte auf Basis der digitalen Unkraut-Verteilungskarte, wobei auf der digitalen Applikationskarte diejenigen Orte auf dem Feld verzeichnet sind, an denen eine Schadschwelle eines oder mehrere Unkräuter und/oder Ungräser überschritten worden ist und an denen eines oder mehrere Herbizide gegen die Unkräuter und/oder Ungräser appliziert werden sollen;
   (C) ein erstes Applizieren eines oder mehrerer Herbizide gegen die Unkräuter und/oder Ungräser unter Verwendung der digitalen Applikationskarte aus Schritt (B);
   (D) mindestens ein weiteres Applizieren eines oder mehrerer Herbizide gegen die Unkräuter und/oder Ungräser unter Verwendung der digitalen Applikationskarte aus Schritt (B).
2. Das Verfahren gemäß Ausführungsform 1, wobei die Anzahl der Applikationen eines oder mehrere Unkräuter auf Basis der digitalen Applikationskarte aus Schritt (B) zwei, drei oder vier beträgt.
3. Das Verfahren gemäß einer der Ausführungsformen 1 oder 2, dadurch gekennzeichnet, dass nach einer Applikation eines oder mehrerer Herbizide erneut eine digitale Unkraut-Verteilungskarte gemäß Schritt (A) erzeugt und in Schritt (B) in der bestehenden digitalen Applikationskarte diejenigen Bereiche ergänzt werden, in denen in der neuen digitalen Unkraut-Verteilungskarte Schadschwellen eines oder mehrerer Unkräuter und/oder Ungräser überschritten worden sind.
4. Das Verfahren gemäß einer der Ausführungsformen 1, 2 oder 3, dadurch gekennzeichnet, dass zumindest in einem Teil der Bereiche des Feldes, in denen zwar Unkräuter und/oder Ungräser detektiert worden sind, in denen aber keine Schadschwelle überschritten worden ist, eine mechanische Entfernung von Unkräutern und/oder Ungräsern oder Teilen davon erfolgt.
5. Das Verfahren gemäß einer der Ausführungsformen 1 bis 4, dadurch gekennzeichnet, dass in der digitalen Applikationskarte für jeden Ort, bei dem eine Schadschwelle eines Unkrauts/Ungrases erreicht oder überschritten worden ist, eine Zahl für die mehrfache Applikationen eines oder mehrerer Herbizide verzeichnet wird, wobei die Zahl bei jeder erfolgten Applikation um eins reduziert wird, bis alle geplanten Applikationen erfolgt sind und die Orte von der Applikationskarte entfernt werden.
6. Ein System zur Bekämpfung von Unkräutern und/oder Ungräsern umfassend:
   (a) eine digitale Unkraut-Verteilungskarte, auf der Orte auf einem Feld, auf dem Kulturpflanzen angebaut werden, verzeichnet sind, an denen Unkräuter und/oder die Ungräser detektiert worden sind;
   (b) eine digitale Applikationskarte, auf der diejenigen Orte auf dem Feld verzeichnet sind, an denen eine Schadschwelle bei den detektierten Unkräutern und/oder Ungräsern überschritten worden ist;
   (c) ein Positionsbestimmungssystem;
   (d) eine Applikations-Vorrichtung, umfassend
      - mindestens einen Behälter zur Aufnahme mindestens einer Herbizid-Formulierung,
      - eine Sprühvorrichtung zum Applizieren der Herbizid-Formulierung, und
      - eine Steuereinheit, mit einem Arbeitsspeicher zum Einlesen der digitalen Applikationskarte, einer Verbindung zum Positionsbestimmungssystem und Mitteln zur Steuerung der Sprühvorrichtung.
7. Das System gemäß Ausführungsform 6, dadurch gekennzeichnet, dass die Steuereinheit die Applikation mindestens einer Herbizid-Formulierung mittels der Sprühvorrichtung startet, wenn das Positionsbestimmungssystem signalisiert, dass sich die Applikations-Vorrichtung an einem Ort befindet, an dem gemäß der digitalen Applikationskarte die Applikation der mindestens einen Herbizid-Formulierung vorgesehen ist.
8. Das System gemäß einer der Ausführungsformen 6 oder 7, dadurch gekennzeichnet, dass in der digitalen Applikationskarte für jeden Ort, bei dem eine Schadschwelle eines Unkrauts/Ungrases erreicht oder überschritten worden ist, eine Zahl für die mehrfache Applikationen eines oder mehrerer Herbizide verzeichnet ist, wobei die Zahl angibt, wie viele Applikationen an dem Ort noch zu erfolgen haben.
9. Eine Verwendung einer digitalen Applikationskarte, auf der Orte auf einem Feld verzeichnet sind, an denen eine Schadschwelle eines oder mehrerer Unkräuter und/oder Ungräser überschritten worden ist,
zur mehrfachen Applikation eines oder mehrerer Herbizide gegen die Unkräuter und/oder Ungräser,
dadurch gekennzeichnet, dass für jeden Ort, für den eine Schadschwelle eines Unkrauts/Ungrases überschritten worden ist, in der Applikationskarte eine Mehrzahl an Applikationen eingetragen wird, wobei die Zahl bei jeder erfolgten Applikation ums eins reduziert wird.

Die Erfindung wird nachstehend anhand eines Beispiels näher erläutert.

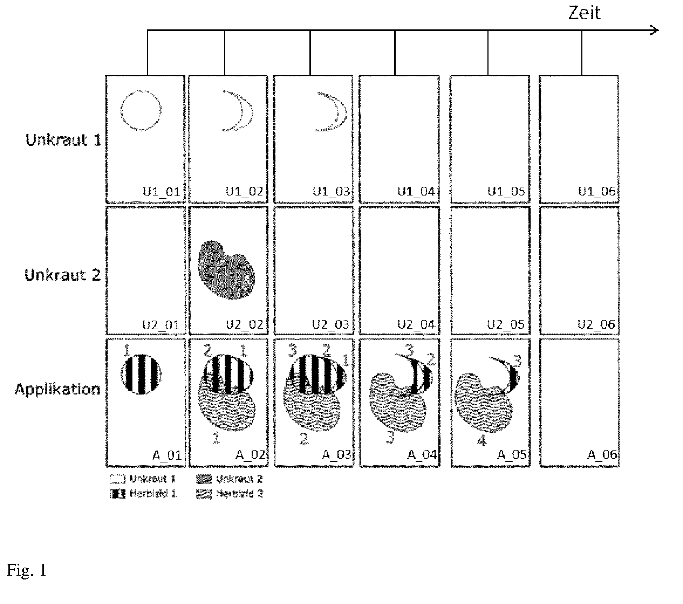

Fig. 1 zeigt die zeitliche Entwicklung eines Feldes. Das Feld ist als Rechteck dargestellt. Jedes der mit U1_01 bis U1_06, U2_01 bis U2_06 sowie A_01 bis A_06 beschrifteten Rechtecke repräsentiert dasselbe Feld, allerdings unter verschiedenen Gesichtspunkten und/oder zu verschiedene Zeiten.

Die Zeit ist in sechs Momentaufnahmen unterteilt. Die Zeit schreitet dabei spaltenweise von links nach rechts fort. Die Felder U1_01, U2_01 und A_01 repräsentieren unterschiedliche Aspekte desselben Feldes zur selben Zeit.

Die Felder U1_02, U2_02 und A_02 repräsentieren unterschiedliche Aspekte desselben Feldes ebenfalls zur selben Zeit, jedoch zu einem späteren Zeitpunkt als die Felder U1_01, U2_01 und A_01.

In der ersten Spalte ist demnach das Feld zu einem ersten Zeitpunkt dargestellt, in der zweiten Spalte zu einem späteren zweiten Zeitpunkt und so fort. Die Zeitspannen, die zwischen zwei Spalten liegen, können beispielsweise die Dauer einer Vegetationsperiode (in der Regel ein Jahr) der Kulturpflanze, die auf dem Feld angebaut wird, betragen. Es kann sich auch um die Vegetationsperiode eines Unkrauts/Ungrases handeln. In der Regel hat in dem Zeitraum, der zwischen zwei aufeinanderfolgenden Spalten liegt, die Applikation eines oder mehrerer Herbizide stattgefunden - dies ist in der unteren Reihe dargestellt (A_01 bis A_06) - es sei denn, es wurden über mehrere Zeitabschnitte hinweg keine Unkräuter detektiert (letzte Spalte).

Die Felder U1_01, U1_02, U1_03, U1_04, U1_05 und U1_06 zeigen sechs zeitlich aufeinander folgende Aufnahmen desselben Felds in Bezug auf das Vorhandensein (bzw. Nicht-Vorhandensein) eines Unkrauts 1 an.

Die Felder U1_01, U1_02, U1_03, U1_04, U1_05 und U1_06 repräsentieren somit Unkraut-Verteilungskarten in Bezug auf Unkraut 1. Die Felder U2_01, U2_02, U2_03, U2_04, U2_05 und U2_06 repräsentieren Unkraut-Verteilungskarten in Bezug auf Unkraut 2. Die Verteilungen der Unkräuter 1 und 2 hätten auch in einer einzigen Verteilungskarte zusammengefasst werden können, sie sind hier jedoch separat dargestellt.

Zum Zeitpunkt 01 wurde im Feld ein Unkraut 1 identifiziert; das Unkraut 1 lag in Form eines kreisförmigen Bereichs (=Teilfläche) vor (siehe U1_01).

Zum selben Zeitpunkt 01 lag in dem Feld kein Unkraut 2 vor (siehe U2_01).

Aus den Unkraut-Verteilungskarten U1_01 und U2_01 wurde eine Applikationskarte A_01 erstellt. Da nur das Unkraut 1 auf dem Feld detektiert worden ist, enthält die Applikationskarte A_01 auch nur Informationen und Anweisungen in Bezug auf das Unkraut 1. In der Applikationskarte A_01 ist ein kreisförmiger Bereich mit einer Schraffur markiert, bei dem in U1_01 das Unkraut 1 detektiert worden ist. In diesem Bereich soll das Herbizid 1 appliziert werden. Die Ziffer 1 über dem schraffierten Bereich gibt an, dass es sich bei der Applikation des Herbizids 1 um die erste Applikation handelt.

Zu einem späteren Zeitpunkt nach der Applikation des Herbizids 1 ist in U1_02 zu erkennen, dass das Unkraut 1 offensichtlich nicht mehr in dem vorherigen kreisförmigen Bereich aufzufinden ist; offensichtlich war die Applikation des Herbizids 1 erfolgreich. Stattdessen hat sich jedoch ein sichelförmiger Bereich neben dem vorangegangenen kreisförmigen Bereich herausgebildet, in dem Unkraut 1 detektiert worden ist. Das Unkraut 1 hat sich in dem Feld also nach rechts verlagert.

Zusätzlich ist ein Unkraut 2 aufgetreten (siehe U2_02). Aus diesen Befunden ergibt sich die Applikationskarte A_02. Zunächst einmal ist in A_02 dargestellt, dass das Herbizid 2 weiterhin in dem kreisförmigen Bereich appliziert werden soll, bei dem in U1_01 das Unkraut 1 detektiert worden ist, auch wenn es in U1_02 nicht mehr detektiert worden ist. Dies ist genau der Kern der vorliegenden Erfindung: die Applikationskarte A_01 wird mehrfach angewendet/abgearbeitet. Die Ziffer 2 über dem schraffierten Bereich gibt an, dass ein zweites Mal appliziert wird.

Die Applikationskarte A_01 ist in A_02 anhand der Befunde in U1_02 und U2_02 erweitert worden. Da nun ein sichelförmiger Bereich an Unkraut 1 in U1_02 detektiert worden ist, wurde der schraffierte Bereich in A_02 entsprechend erweitert. Die Ziffer 1 über dem erweiterten schraffierten Bereich gibt an, dass dieser erweiterte Bereich erstmalig mit dem Herbizid 1 behandelt wird.

Zusätzlich ist in A_02 angegeben, dass Herbizid 2 in dem Bereich (gewellter Bereich) appliziert werden soll, in dem in U2_02 Unkraut 2 detektiert worden ist. Die Ziffer 1 unterhalb des gewellten Bereichs gibt an, dass Herbizid 2 in diesem Bereich erstmalig appliziert werden soll.

In U1_03 ist gezeigt, dass sich der Bereich mit Unkraut 1 weiter nach rechts verlagert hat. In U2_03 ist das Unkraut 2 völlig verschwunden. A_03 repräsentiert die zu U1_03 und U2_03 zugehörige Applikationskarte. Im kreisförmigen Bereich von A_01 wird auch gemäß A_03 weiterhin Herbizid 1 appliziert, und zwar zum dritten Mal. Auch in dem sichelförmigen Bereich, der in A_02 zum kreisförmigen Bereich hinzugekommen ist, wird weiterhin Herbizid 1 appliziert, und zwar zum zweiten Mal. Zusätzlich wird in dem Bereich Herbizid 1 appliziert, der in U1_03 neu aufgetreten ist, und zwar zum ersten Mal.

Gemäß A_03 wird auch Herbizid 2 ein weiteres Mal appliziert, und zwar im selben Bereich wie bei A_02. Es sind in U2_03 keine neuen Bereiche hinzugekommen.

In U1_04 ist dargestellt, dass nach der Applikation gemäß A_03 kein Unkraut 1 mehr auf dem Feld detektiert worden ist. In U2_04 ist dargestellt, dass nach der Applikation gemäß A_03 kein Unkraut 2 mehr auf dem Feld detektiert worden ist. Dennoch werden gemäß A_04 die Herbizide 1 und 2 appliziert. In dem kreisförmigen Bereich aus A_01 wird in A_04 erstmalig kein Herbizid 1 mehr appliziert. In diesem Bereich wurde dreimal Herbizid 1 appliziert - diese Applikationsanzahl ist offensichtlich ausreichend, um das Nest dauerhaft zu beseitigen.

In den sichelförmigen Bereichen, die in A_02 und A_03 zum kreisförmigen Bereich hinzugekommen sind, wird ein weiteres Mal appliziert; im Fall des zuerst aufgetretenen sichelförmigen Bereichs (siehe U1_02) zum dritten Mal, im Fall des danach aufgetretenen sichelförmigen Bereichs (siehe U1_03) zum zweiten Mal.

Der Bereich aus U2_02 wird in A_04 zum dritten Mal mit Herbizid 2 versehen.

In U1_05 und U2_05 ist weiterhin kein Unkraut mehr detektiert worden. Es wird dennoch weiterhin gemäß A_05 appliziert: ein letztes (drittes) Mal in dem Bereich von U1_03 mit Herbizid 1 und ein letztes (viertes) Mal in dem Bereich von U2_02 mit Herbizid 2.

U1_06 und U2_06 zeigen an, dass weiterhin kein Unkraut mehr detektiert worden ist. Gemäß A_06 ist keine Applikation eines Herbizids notwendig.

Es sei noch angemerkt, dass in diesem Beispiel nicht explizit auf die Schadschwellen von Unkraut 1 und Unkraut 2 eingegangen wurde. In diesem Beispiel muss davon ausgegangen werden, dass immer dann, wenn in dem Feld Unkraut 1 oder Unkraut 2 detektiert worden ist, die Schadschwellen überschritten gewesen sind.

### Literatur

Gerhards R. 2010. Spatial and Temporal Dynamics of Weed Populations. In "Precision Crop Protection - the Challenge and Use of Heterogeneity. Eds.: Oerke, EC, Gerhards R, Menz G, Sikora RA. Springer, Heidelberg. ISBN 978-90-481-9276-2, S. 17-25.
Nordmeyer H. 2006. Patchy weed distribution and site-specific weed control in winter cereals. Precision Agric 7, 219-231.
Oveisi M, Yousefi AR, Gonzalez-Andajur JL. Spatial distribution and temporal stability of crenate broomrape (Orobranche crenata Forsk) in faba bean (Vicia faba L.): A long-term study at two localities. Crop Protection 29, 717-720.
Wilson BJ, Brain P. 1991. Long-term stability of distribution of Alopecurus myosuroides Huds. within cereal fields. Weed Res 31, 367-373.
Campos-Herrera R., Johnson E.G., EL-Borai F.E., Stuart R.J., Graham J.H,. Duncan L.W. 2011. Long-term stability of entomopathogenic nematode spatial patterns in soil as measured by sentinel insects and real-time PCR assaysAnn Appl Biol 158: 55-68.
B.V. Ortiz, C. Perry, P. Goovaerts, G. Vellidis, and D. Sullivane. Geostatistical modeling of the spatial variability and risk areas of southern root-knot nematodes in relation to soil properties. Geoderma. 2010 May; 156(3-4): 243-252.
Godefroid M., Delaville L., Marie-Luce S., Quénéhervé P. 2013. Spatial stability of a plant-feeding nematode community in relation to macro-scale soil properties. Soil Biology & Biochemistry 57: 173-181.

## Patentansprüche

1. Verfahren zur Bekämpfung von Schadorganismen auf einem Feld, auf dem Kulturpflanzen angebaut werden, das durch die folgenden Schritte gekennzeichnet ist:
(A) Erzeugen einer digitalen Schadorganismen-Verteilungskarte, auf der Teilflächen auf dem Feld verzeichnet sind, an denen die Schadorganismen direkt oder indirekt detektiert worden sind;
(B) Erzeugen einer digitalen Applikationskarte auf Basis der digitalen Unkraut-Verteilungskarte, wobei auf der digitalen Applikationskarte diejenigen Teilflächen des Feldes verzeichnet sind, auf denen eines oder mehrere Bekämpfungsmittel gegen die Schadorganismen appliziert werden sollen, wobei für jede dieser Teilflächen eine Zahl *N* von Behandlungen mit einem oder mehreren Bekämpfungsmitteln verzeichnet wird, wobei *N* größer als 1 ist;
(C) Applizieren eines oder mehrerer Bekämpfungsmittel gegen die Schadorganismen gemäß der digitalen Applikationskarte aus Schritt (B), wobei die Zahl *N* für die behandelten Teilflächen um 1 vermindert wird;
(D) Wiederholen des Schrittes (C) für jede Teilfläche bis *N* für den Wert Null erreicht hat.

2. Verfahren nach Anspruch 1, wobei in die digitale Applikationskarte diejenigen Teilflächen des Feldes aufgenommen werden, bei denen in Schritt (A) Schadorganismen direkt oder indirekt detektiert worden sind, und bei denen eine Schadschwelle erreicht oder überschritten ist.

3. Verfahren nach Anspruch einem der Ansprüche 1 oder 2, wobei es sich bei den Schadorganismen um Unkräuter und/oder Ungräser handelt und es sich bei dem einen oder mehreren Bekämpfungsmitteln um ein oder mehrere Herbizide handelt.

4. Verfahren nach Anspruch einem der Ansprüche 1 oder 2, wobei es sich bei den Schadorganismen um tierische Schädlinge, vorzugsweise um Nematoden oder Kohlschotenmücken, und bei dem einen oder mehreren Bekämpfungsmitteln um Pestizide handelt.

5. Verfahren nach einem der Ansprüche 1 bis 4, wobei die Zahl N bei der Erzeugung der digitalen Applikationskarte auf zwei, drei oder vier gesetzt wird.

6. Verfahren nach einem der Ansprüche 1 bis 5, **dadurch gekennzeichnet, dass** nach einer erfolgten Applikation eines oder mehrerer Bekämpfungsmittel auf den betroffenen Teilflächen erneut eine digitale Schadorganismen-Verteilungskarte gemäß Schritt (A) erzeugt wird, und in Schritt (B) in der bestehenden digitalen Applikationskarte diejenigen Bereiche ergänzt werden, in denen in der neuen digitalen Schadorganismen-Verteilungskarte Schadorganismen aufgefunden wurden, wobei die Teilflächen, bei denen *N* den Wert Null noch nicht erreicht hat, bestehen bleiben, und Teilflächen, bei denen *N* den Wert Null erreicht hat, gelöscht werden.

7. Verfahren nach einem der Ansprüche 1 bis 6, **dadurch gekennzeichnet, dass** begleitend zur Bekämpfung der Schadorganismen mit einem Bekämpfungsmittel eine physikalische Bekämpfung erfolgt oder dass zumindest in einem Teil der Bereiche des Feldes, in denen zwar Schadorganismen detektiert worden sind, in denen aber keine Schadschwelle überschritten worden ist, eine physikalische Bekämpfung der Schadorganismen erfolgt.

8. Digitale Applikationskarte, auf der Teilflächen eines Feldes für Kulturpflanzen verzeichnet sind, wobei für jede Teilfläche eine ganze Zahl N verzeichnet ist, die angibt, wie viele Male die Teilfläche mit einem oder mehreren Bekämpfungsmitteln für die Schadorganismen behandelt werden sollen, wobei N größer als 1 ist.

9. Digitale Applikationskarte nach Anspruch 8, wobei auf der Applikationskarte diejenigen Teilflächen verzeichnet sind, bei denen ein Schadorganismus eine Schadschwelle erreicht oder überschritten hat.

10. Digitale Applikationskarte nach einem der Ansprüche 8 oder 9, wobei die Applikationskarte Steuerbefehle für eine Vorrichtung für die Applikation eines oder mehrere Bekämpfungsmittel enthält.

11. Digitale Applikationskarte nach einem der Ansprüche 8 bis 10, wobei es sich bei den Schadorganismen um Unkräuter und/oder Ungräser handelt und es sich bei dem einen oder mehreren Bekämpfungsmitteln um ein oder mehrere Herbizide handelt.

12. Digitale Applikationskarte nach einem der Ansprüche 8 bis 10, wobei es sich bei den Schadorganismen um tierische Schädlinge, vorzugsweise um Nematoden oder Kohlschotenmücken und bei dem einen oder mehreren Bekämpfungsmitteln um Pestizide handelt.

13. Digitale Applikationskarte nach einem der Ansprüche 8 bis 10, wobei es sich bei den Schadorganismen um Pilze, vorzugsweise um Septoria, und bei dem einen oder mehreren Bekämpfungsmitteln um Fungizide handelt.

14. Digitale Applikationskarte nach einem der Ansprüche 8 bis 13, in der mit einem oder mehreren Bekämpfungsmitteln N-fach zu behandelnde Teilflächen zu einem Zeitpunkt aufgenommen worden sind, zu dem mindestens eine der in der digitalen Applikationskarte bereits bestehenden Teilflächen mindestens einmal mit einem oder mehreren Bekämpfungsmitteln behandelt worden ist.

15. System zur Bekämpfung von Schadorganismen umfassend:
(a) eine digitale Applikationskarte, auf der diejenigen Teilflächen eines Feldes verzeichnet sind, die mit einem oder mehreren Bekämpfungsmitteln für die Schadorganismen behandelt werden sollen;
(b) ein Positionsbestimmungssystem;
(c) eine Applikations-Vorrichtung, umfassend
- mindestens einen Behälter zur Aufnahme mindestens eines Bekämpfungsmittels gegen die Schadorganismen,
- eine Sprühvorrichtung zum Applizieren des mindestens einen Bekämpfungsmittels, und
- eine Steuereinheit, umfassend einen Arbeitsspeicher zum Einlesen der digitalen Applikationskarte, Mittel zur Kommunikation mit dem Positionsbestimmungssystem und Mittel zur Steuerung der Sprühvorrichtung,
**dadurch gekennzeichnet, dass** auf der digitalen Applikationskarte für jede Teilfläche eine Zahl N verzeichnet ist, die angibt, wie viele Male eine Behandlung der Teilfläche mit dem Bekämpfungsmittel erfolgen soll, wobei *N* größer als 1 ist, und wobei die Steuereinheit so ausgestattet ist, dass die Zahl *N* nach einer erfolgten Behandlung um eins vermindert wird.

16. System nach Anspruch 15, wobei es sich bei den Schadorganismen um Unkräuter und/oder Ungräser handelt und es sich bei dem einen oder mehreren Bekämpfungsmitteln um ein oder mehrere Herbizide handelt.

17. System nach einem der Ansprüche 15 oder 16, **dadurch gekennzeichnet, dass** die Steuereinheit die Applikation mindestens eines Bekämpfungsmittels mittels der Sprühvorrichtung startet, wenn das Positionsbestimmungssystem signalisiert, dass sich die Applikations-Vorrichtung an einem Ort befindet, an dem gemäß der digitalen Applikationskarte die Applikation des mindestens einen Bekämpfungsmittels vorgesehen ist.

18. Verwendung einer digitalen Applikationskarte nach einem der Ansprüche 8 bis 14,
zur Applikation eines oder mehrerer Bekämpfungsmittel gegen die Schadorganismen,
**dadurch gekennzeichnet, dass** die Teilflächen N-mal mit einem oder mehreren Bekämpfungsmitteln behandelt werden, wobei N eine ganze Zahl größer als 1 ist.
